# EUROPÄISCHE PATENTSCHRIFT

(11) **EP 2 274 186 B1**
(45) Veröffentlichungstag und Bekanntmachung des Hinweises auf die Patenterteilung: **07.08.2013**
(21) Anmeldenummer: 10700327.9
(22) Anmeldetag: 13.01.2010
(51) Int. Cl.: B60S 9/08

(54) **HÖHENVERSTELLBARE STÜTZE FÜR SATTELAUFLIEGER ODER DERGLEICHEN**
HEIGHT-ADJUSTABLE SUPPORT FOR SEMITRAILERS OR THE LIKE
SUPPORT RÉGLABLE EN HAUTEUR POUR SEMI-REMORQUE OU ANALOGUE

(30) Priorität: 20.01.2009 DE 202009000634 U
(43) Veröffentlichungstag der Anmeldung: 19.01.2011
(73) Patentinhaber: SAF-HOLLAND GmbH, 63856 Bessenbach (DE)
(72) Erfinder: RIEDL, Reinhold, 63897 Miltenberg (DE)
(74) Vertreter: Müller Schupfner & Partner
(86) Internationale Anmeldenummer: PCT/EP2010/050322
(87) Internationale Veröffentlichungsnummer: WO 2010/084065

(56) Entgegenhaltungen:
- EP-B1- 1 104 369
- DE-A1- 10 017 322
- DE-U1- 8 813 558
- US-A- 3 010 699
- US-A1- 2001 020 781

## Beschreibung

Die Erfindung bezieht sich auf eine höhenverstellbare Stütze für Sattelauflieger oder dergleichen gemäß dem Oberbegriff des Anspruchs 1. Derartige Stützen werden paarweise im vorderen Bereich von Sattelaufliegern angeordnet und können im Schnellgang in Abstütz- oder Transportstellung gebracht und erforderlichenfalls im Lastgang zum Anheben einer Teilmasse des Sattelaufliegers benutzt werden.

Eine gattungsgemäße Stütze ist aus der EP 1 104 369 B1 bekannt. Deren durchmessergroßes Zahnrad für den Schnellgang ist topförmig ausgebildet und lagert in einer Abdeckung, die an einer äußeren Hülse sitzt. Der große Zahnkranz dieses Zahnrades taucht dabei unmittelbar an der Stützenvorderseite baulich unterhalb der Getriebeeingangswelle in die äußere Hülse ein. Das bedingt konstruktiv eine wesentliche Verkürzung des vorderen Wandbereiches der inneren Hülse, womit ein Verlust an Führungslänge zwischen der äußeren und der inneren Hülse einhergeht, was sich bei extremem Ausfahrhub der inneren Hülse als Verlust an Knick- und Biegesteifigkeit der Stütze auswirkt.

Der Erfindung liegt die Aufgabe zugrunde, eine höhenverstellbare Stütze für Sattelauflieger vorzuschlagen, bei der auf einfache und sichere Weise zwischen einem Lastgang und einem Schnellgang gewechselt werden kann.

Diese Aufgabe wird durch eine höhenverstellbare Stütze für Sattelauflieger oder dergleichen mit den im Anspruch 1 angegebenen Merkmalen gelöst. Bevorzugte Ausführungsformen ergeben sich aus den abhängigen Ansprüchen.

Erfindungsgemäß ist eine höhenverstellbare Stütze für Sattelauflieger oder dergleichen vorgesehen, umfassend einen an einem Sattelaufliegerrahmen befestigbaren Schaftrohrkörper, ein im Schaftrohrkörper angeordnetes verschiebbares Stützeninnenrohr, an dessen unteren Endbereich ein Fuss befestigt ist und das mit einer Mutter verbunden ist, die sich auf einer Spindel befindet, welche über ein Getriebe antreibbar ist, das einen schaltbaren Stirnzahnräderbereich und eine Kegelradstufe aufweist, wobei ein Schaltungsbereich des Getriebes ein Lastgangritzel und ein Schnellgangzahnrad aufweist, wobei das Lastgangritzel einer Antriebswelle bzw. einem Ritzel-Kupplungsteil zu- bzw. daran angeordnet ist, welches mit einem Lastgangzahnrad kämmen kann, wobei das Schnellgangzahnrad den Antrieb eines Schnellgangritzels bewirken kann, wobei das Schnellgangzahnrad auf der Antriebswelle bzw. dem Ritzel-Kupplungsteil gelagert ist, und wobei die Antriebswelle bzw. das Ritzel-Kupplungsteil drehfest und axial verschiebbar in einem Hülsenlager gelagert ist, welches drehbar in einem die Spindel lagernden bzw. tragenden Lagerbock bzw. Lasttragboden gelagert ist.

Bei der erfindungsgemäßen Stütze erfolgt die Lagerung des durchmessergroßen Schnellgangzahnrades auf der Antriebswelle bzw. auf einem Ritzel-Kupplungsteil mit Triebstück, welche jeweils drehfest und axial verschiebbar in einem Hülsenlager gelagert sind, das seinerseits drehbar ist und ebenso wie die Spindel in einem Lasttragboden bzw. Lagerbock lagert.

Erfindungsgemäß wird vorgeschlagen die Antriebswelle bzw. das Ritzel-Kupplungsteils drehfest und axial verschiebbar in einem Hülsenlager zu lagern, das seinerseits drehbar im Lasttragboden gelagert ist.

Vorteilhafterweise hat die Anordnung des durchmessergroßen Zahnrades für den Schnellgangbetrieb keinen negativen Einfluss auf deren optimale Ausgestaltung. Vorzugsweise weist das Hülsenlager innen zumindest eine Längsnut auf, in welcher ein Mitnehmer der Antriebswelle bzw. des Ritzel-Kupplungsteils einführbar ist bzw. mit dieser eingreifen kann.

Vorteilhafterweise weist die Antriebswelle bzw. das Ritzel-Kupplungsteil einen Lagerzapfen mit zumindest einem Mitnehmer, vorzugsweise zwei Mitnehmern, auf, welche vorzugsweise radial abstehen.

Das Hülsenlager kann vorzugsweise innen mit Längsnuten versehen sein, in die für die Herstellung der Drehsteifigkeit mit der Antriebswelle vorzugsweise zwei radial abstehende Mitnehmer am stützeninnenseitigen Endbereich der Antriebswelle eingreifen.

Zweckmäßigerweise ist der Mitnehmer ausgelegt, nach einer Verschiebung der Antriebswelle bzw. des Ritzel-Kupplungsteils mit dem Schnellgangzahnrad in Eingriff zu gelangen. Die Mitnehmer der Antriebswelle können somit nach dem Verschieben der Antriebswelle zum Eingriff in das Schnellgangzahnrad dienen, um dessen Drehung zu bewerkstelligen.

Vorzugsweise weist der Mitnehmer eine Breite und eine Anordnung auf der Antriebswelle bzw. dem Ritzel-Kupplungsteil derart auf, dass zugleich ein Eingriff mit dem Schnellgangzahnrad und dem Hülsenlager ermöglicht wird. Wenn die Breite und die Anordnung der Mitnehmer so gewählt werden, dass bei deren Koppelung mit dem Schnellgangzahnrad gleichzeitig auch ein formschlüssiger Eingriff in das Hülsenlager gewährleistet ist, wird erreicht, dass während des Schnellgangbetriebs das Hülsenlager synchron zum Schnellgangzahnrad mitdreht. Das ergibt den Vorteil, dass das Umschalten aus dem Schnellgang durch leichtes axiales Verschieben der Antriebswelle möglich ist, da die Mitnehmer innerhalb der dabei axial fluchtenden Längsnuten des Schnellgangzahnrades und des Hülsenlagers übergleiten können.

Bevorzugterweise ist die Antriebswelle in einem Flanschlager gelagert, welches höhenmäßig unterhalb der Abtriebswelle angeordnet ist.

Weiterhin bevorzugt ragt im vorzugsweise eingefahrenen Zustand der Stütze der untere Bereich des Schnellgangzahnrads höhenmäßig in das Stützeninnenrohr hinein.

Vorzugsweise ist die Antriebswelle bzw. das Ritzel-Kupplungsteil senkrecht zur Spindel angeordnet.

Zweckmäßigerweise ist das Schnellgangzahnrad innerhalb des Schaftrohrkörpers von dessen vorderer Wand beabstandet. Das Schnellgangzahnrad ist innerhalb des Schaftrohrkörpers von dessen vorderen Wand beabstandet und vorzugsweise mit seinem unteren Bereich höhenmäßig in das Stützeninnenrohr hineinragend angeordnet. Auch die Lagerung des Schnellgangzahnrades erfolgt im Innenbereich des Schaftrohrkörpers. Vorteilhafter Weise muss hierfür der vordere Wandbereich des Stützeninnenrohrs nicht festigkeitsmindernd-ausgeschnitten sein.

Bevorzugt ist das Hülsenlager in einer Lagerbohrung des Lagerbocks bzw. Lasttragbodens gelagert.

Vorzugsweise ist das Schnellgangzahnrad so gestaltet und auf der Antriebswelle gelagert, dass es einfach vertikal ein- oder ausgebaut werden kann, ohne eine große Öffnung in der vorderen Wand des Schaftrohrkörpers bereitzustellen oder ohne ein seitliches Verschieben notwendig zu machen.

Weitere Vorteile und Merkmale der Erfindung ergeben sich aus der nachfolgenden Beschreibung von bevorzugten Ausführungen mit Bezug auf die beigefügten Figuren, wobei einzelne Merkmale von unterschiedlichen Ausführungsformen zu neuen Ausführungsformen kombiniert werden können. Es zeigen:
- Fig. 1: eine Vorderansicht einer bevorzugten Ausführungsform der erfindungsgemäßen Stütze,
- Fig. 2: eine Seitenansicht einer bevorzugten Ausführungsform der in Fig. 1 gezeigten Stütze,
- Fig.3: einen Längsschnitt einer bevorzugten Ausführungsform der in Fig.1 gezeigten Stütze in Lastgangschaltstellung entlang der Linie A-A und
- Fig.4: einen Längsschnitt einer bevorzugten Ausführungsform gemäß der in Fig.3 gezeigten Stütze in Schnellgangschaltstellung.

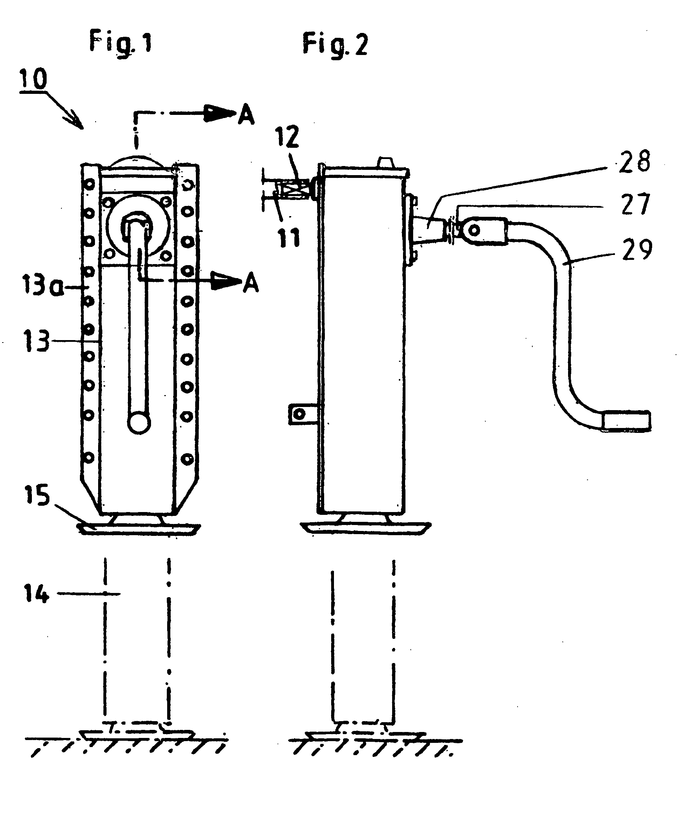

Die in **Figs.1** und **2** gezeigte Stütze 10 wird paarweise am Chassis eines Sattelaufliegers in dessen vorderen Bereich befestigt. Die Stützen 10 eines jeden Paares sind mittels einer Verbindungswelle 11 an ihren Getriebeausgangs- bzw. Abtriebswellen 12 miteinander verbunden und in Transportstellung eingefahren, d.h. in verkürztem Zustand. Vor dem Abkoppeln des Sattelaufliegers vom Sattelschlepper, werden die Stützen 10 ausgefahren.

Die Stütze 10 weist ein Stützenaußenrohr bzw. einen Schaftrohrkörper 13 und ein darin längsverschiebbar angeordnetes Stützeninnenrohr 14 auf. Der Innenbereich des Schaftrohrkörpers 13 und das Stützeninnenrohr 14 besitzen vorzugsweise quadratische Querschnitte. Die Stütze 10 wird über am Schaftrohrkörper 13 befindliche Anflanschschenkel 13a am Sattelaufliegerrahmen befestigt.

Am unteren Ende des Stützeninnenrohres 14 ist ein Fuß 15 zum Aufsetzen auf den Boden befestigt.

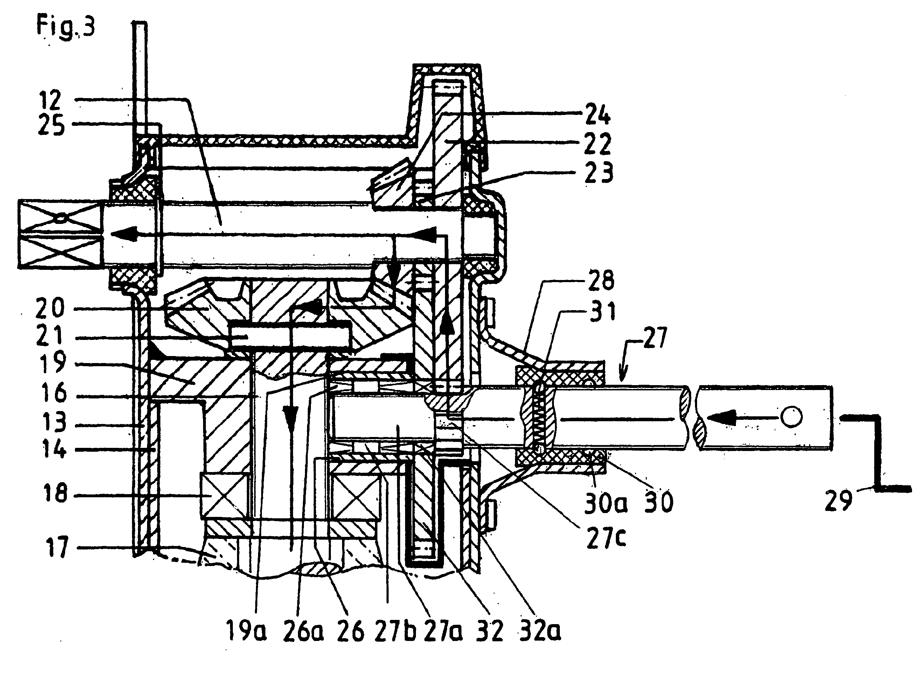

Wie **Fig. 3** zeigt, weist die Stütze 10 eine Spindel 16 mit einer Spindelmutter bzw. Mutter 17 auf. Die Mutter 17 ist mit dem Stützeninnenrohr 14 verbunden (nicht gezeigt). Auf einer Scheibe auf der Schulter der Spindel 16 sitzt ein Axiallager 18 das sich an einem im Schaftrohrkörper 13 befestigten Lagerbock bzw. Lasttragboden 19 abstützt.

Oberhalb des Lasttragbodens 19 befindet sich ein Kegel- bzw. Tellerrad 20, das mittels eines Stifts 21, der die Spindel 16 trägt, drehfest mit der Spindel 16 verbunden ist. Über dem Tellerrad 20 ist die Abtriebswelle 12 angeordnet. Auf der Abtriebswelle 12 sitzen jeweils drehfest ein Lastgangzahnrad 22, ein Schnellgangritzel 23 und ein Kegelrad bzw. Kegelritzel 24. Die Abtriebswelle 12 ist mittels einer Stecksicherungsscheibe 25 axial fixiert.

Im Lasttragboden 19 ist die Spindel 16 vertikal gelagert. Ferner ist in einer Lagerbohrung 19a des Lasttragbodens 19 ein drehbares Hülsenlager 26 horizontal gelagert. Das Hülsenlager 26 weist innen Längsnuten 26a auf. Im Hülsenlager 26 ist der Lagerzapfen 27a einer axialverschiebbaren Antriebswelle 27 drehfest eingelagert. Der Lagerzapfen 27a der Antriebswelle 27 besitzt im Vorderbereich radial abstehende Mitnehmer 27b. An der Antriebswelle 27 befindet sich ferner eine Verzahnung als Lastgangritzel 27c. Der Schaft der Antriebswelle 27 ist in einem Flanschlager 28 gelagert, das am Schaftrohrkörper 13 befestigt ist.

Am äußeren Ende der Antriebswelle 27 ist eine Handkurbel 29 angebracht. Das Flanschlager 28 weist eine Bundbuchse 30 mit zwei Radialnuten 30a auf, in die eine in die Antriebswelle 27 eingebaute Kugelarretierung 31 wechselweise einrasten kann.

Auf dem Lagerzapfen 27a lagert ein Schnellgangzahnrad 32, das innen Längsnuten 32a aufweist, die querschnittsmäßig und bezüglich ihrer radialen Anordnung den Längsnuten 26a im Hülsenlager 26 entsprechen.

Die Getriebefunktionen der Stütze 10 sind wie folgt:

Für den Lastgangbetrieb ist gemäß **Fig.3** die Antriebswelle 27 eingeschoben, wobei die Verzahnung des Lastgangritzels 27c in Eingriff mit dem Lastgangzahnrad 22 ist und sich die Mitnehmer 26b innerhalb der Längsnuten 26a des Hülsenlagers 26 befinden. Die Antriebswelle 27 ist durch Einrasten der Kugelarretierung 31 in die hintere Radialnut 30a der Bundbuchse 30 axial fixiert.

Beim Drehen der Handkurbel 29 an der Antriebswelle 27 wird das Hülsenlager 26, bewirkt durch die Mitnehmer 26b, mitgedreht und das Drehmoment wird wie mit Pfeillinien in **Fig.3** angezeigt übertragen. Dies erfolgt vom Lastgangritzel 27c auf das Lastgangzahnrad 22, über die Abtriebswelle 12 auf das Kegelritzel 24, von dort über das Tellerrad 20, dann auf die Spindel 16 und die Mutter 17, die das Stützeninnenrohr 14 bewegt.

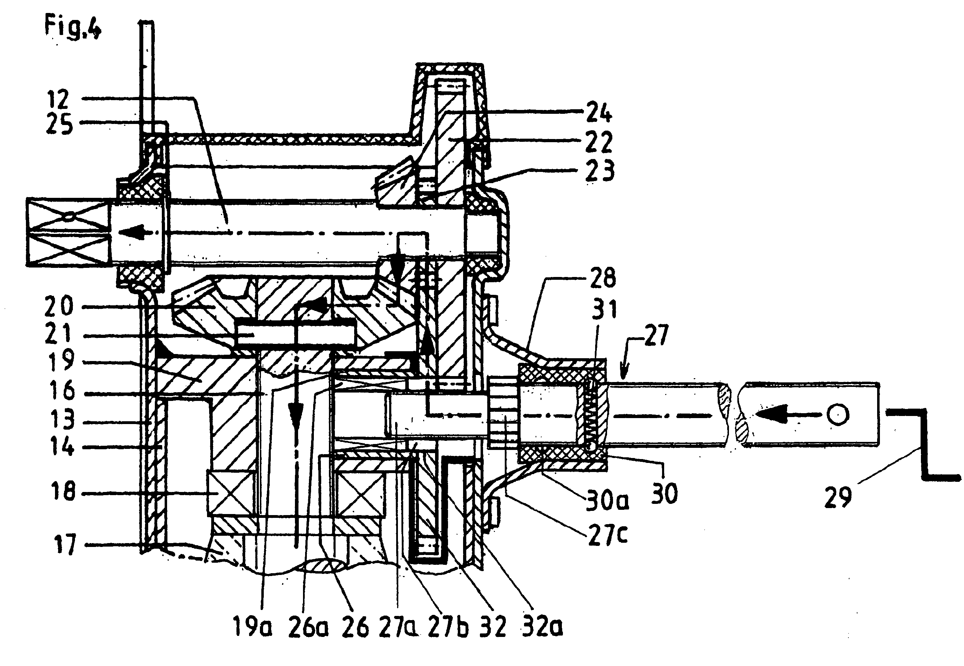

Im Schnellgangbetrieb ist gemäß **Fig.4** die Antriebswelle 27 nach außen verschoben. Dabei ist die Überdeckung der Verzahnung des Lastgangritzels 27c mit dem Lastgangzahnrad 22 aufgehoben und die Kugelarretierung 31 ist in die vordere Radialnut 30a der Bundbuchse 30 eingerastet.

Die Stellung der Mitnehmer 27b ist derart, dass diese sowohl in die Längsnuten 32a als auch in die Längsnuten 26a eingreifen und das Schnellgangzahnrad 32 antreiben, wobei zugleich das Hülsenlager 26 mitgedreht werden kann.

Der Kraftfluss erfolgt beim Drehen der Handkurbel 29, wie in **Fig. 4** mit strichpunktierten Pfeillinien gezeigt, von der Antriebswelle 27 über die Mitnehmer 27b in das Schnellgangzahnrad 32 und von diesem auf das Schnellgangritzel 23. Der weitere Kraftverlauf ist wie zu **Fig. 3** beschrieben.

Zwischen der Schaltstellung für den Lastgang und der für den Schnellgang des Getriebes ist eine Freischaltung möglich. Dabei ist das Lastgangritzel 27c außer Eingriff und die Mitnehmer 27b befinden sich wie während des Lastgangbetriebs in einer Stellung innerhalb der Längsnuten 26a des Hülsenlagers 26.
- **10**: Stütze
- **11**: Verbindungswelle
- **12**: Abtriebswelle
- **13**: Schaftrohrkörper
- **13a**: Anflanschschenkel
- **14**: Stützeninnenrohr
- **15**: Fuß
- **16**: Spindel
- **17**: Mutter
- **18**: Axiallager
- **19**: Lasttragboden
- **19a**: Lagerbohrung
- **20**: Tellerrad
- **21**: Stift
- **22**: Lastgangzahnrad
- **23**: Schnellgangritzel
- **24**: Kegelritzel
- **25**: Stecksicherungsscheibe
- **26**: Hülsenlager
- **26a**: Längsnut
- **27**: Antriebswelle
- **27a**: Lagerzapfen
- **27b**: Mitnehmer
- **27c**: Verzahnung als Lastgangritzel
- **28**: Flanschlager
- **29**: Handkurbel
- **30**: Bundbuchse
- **30a**: Radialnut
- **31**: Kugelarretierung
- **32**: Schnellgangzahnrad
- **32a**: Längsnut

## Patentansprüche

1. Höhenverstellbare Stütze (10) für Sattelauflieger oder dergleichen, umfassend
einen an einem Sattelaufliegerrahmen befestigbaren Schaftrohrkörper (13),
ein im Schaftrohrkörper (13) angeordnetes verschiebbares Stützeninnenrohr (14), an dessen unteren Endbereich ein Fuss (15) befestigt ist und das mit einer Mutter (17) verbunden ist, die sich auf einer Spindel (16) befindet, welche über ein Getriebe antreibbar ist, das einen schaltbaren Stirnzahnräderbereich (22, 23, 27c, 32) und eine Kegelradstufe (20, 24) aufweist,
wobei ein Schaltungsbereich des Getriebes ein Lastgangritzel (27c) und ein Schnellgangzahnrad (32) aufweist,
wobei das Lastgangritzel (27c) einer Antriebswelle (27) bzw. einem Ritzel-Kupplungsteil zu- bzw. daran angeordnet ist, welches mit einem Lastgangzahnrad (22) kämmen kann,
wobei das Schnellgangzahnrad (32) den Antrieb eines Schnellgangritzels (23) bewirken kann,
wobei das Schnellgangzahnrad (32) auf der Antriebswelle (27) bzw. dem Ritzel-Kupplungsteil gelagert ist, und **dadurch gekennzeichnet**, daβ die Antriebswelle (27) bzw. das Ritzel-Kupplungsteil drehfest und axial
verschiebbar in einem Hülsenlager (26) gelagert ist, welches drehbar in einem die Spindel (16) lagernden bzw. tragenden Lagerbock bzw. Lasttragboden (19) gelagert ist.

2. Höhenverstellbare Stütze (10) nach Anspruch 1, wobei das Hülsenlager (26) innen zumindest eine Längsnut (26a) aufweist, in welcher ein Mitnehmer (27b) der Antriebswelle (27) bzw. des Ritzel-Kupplungsteils einführbar ist bzw. mit dieser eingreifen kann.

3. Höhenverstellbare Stütze (10) nach einem der vorhergehenden Ansprüche, wobei die Antriebswelle (27) bzw. das Ritzel-Kupplungsteil einen Lagerzapfen (27a) mit zumindest einem Mitnehmer (27b), vorzugsweise zwei Mitnehmern (27b), aufweist, welche vorzugsweise radial abstehen.

4. Höhenverstellbare Stütze (10) nach Anspruch 3, wobei der Mitnehmer (27b) ausgelegt ist, nach einer Verschiebung der Antriebswelle (27) bzw. des Ritzel-Kupplungsteils mit dem Schnellgangzahnrad (32) in Eingriff zu gelangen.

5. Höhenverstellbare Stütze (10) nach Anspruch 3 oder 4, wobei der Mitnehmer (27b) eine Breite und eine Anordnung auf der Antriebswelle (27) bzw. dem Ritzel-Kupplungsteil derart aufweist, dass zugleich ein Eingriff mit dem Schnellgangzahnrad (32) und dem Hülsenlager (26) ermöglicht wird.

6. Höhenverstellbare Stütze (10) nach einem der vorhergehenden Ansprüche, wobei die Antriebswelle (27) in einem Flanschlager (28) gelagert ist, welches höhenmäßig unterhalb der Abtriebswelle (12) angeordnet ist.

7. Höhenverstellbare Stütze (10) nach einem der vorhergehenden Ansprüche, wobei im vorzugsweise eingefahrenen Zustand der Stütze (10) der untere Bereich des Schnellgangzahnrads (32) höhenmäßig in das Stützeninnenrohr (14) hineinragt.

8. Höhenverstellbare Stütze (10) nach einem der vorhergehenden Ansprüche, wobei die Antriebswelle (27) bzw. das Ritzel-Kupplungsteil senkrecht zur Spindel angeordnet ist.

9. Höhenverstellbare Stütze (10) nach einem der vorhergehenden Ansprüche, wobei das Schnellgangzahnrad (32) innerhalb des Schaftrohrkörpers (13) von dessen vorderer Wand beabstandet ist.

10. Höhenverstellbare Stütze (10) nach einem der vorhergehenden Ansprüche, wobei das Hülsenlager (26) in einer Lagerbohrung (19a) des Lagerbocks bzw. Lasttragbodens (19) gelagert ist.

## Claims

1. A height-adjustable support (10) for semi-trailers or the like, comprising a shaft tube body (13) that can be fastened to a semi-trailer frame,
a slidable support inner tube (14), which is arranged in the shaft tube body (13) and to the lower end region of which a foot (15) is fastened and which is connected to a nut (17) located on a spindle (16), which can be driven by a transmission having a switchable spur gear region (22, 23, 27c, 32) and a bevel gear stage (20, 24),
wherein a shifting region of the transmission comprises a low-gear pinion (27c) and a fast-gear gearwheel (32),
wherein the low-gear pinion (27c) is associated with or arranged on a drive shaft (27) or a pinion coupling part, respectively, that can mesh with a low-gear gearwheel (22),
wherein the fast-gear gearwheel (32) can cause the driving of a fast-gear pinion (23),
wherein the fast-gear gearwheel (32) is supported on the drive shaft (27) or the pinion coupling part, respectively, and
**characterized in that** the drive shaft (27) or the pinion coupling part, respectively, is supported in an unrotatable and axially slidable manner in a sleeve bearing (26), which is supported rotatably in a bearing block or load bearing base (19), respectively, supporting or bearing the spindle (16).

2. The height-adjustable support (10) according to claim 1, wherein the sleeve bearing (26) in its interior is provided with at least a longitudinal groove (26a) into which a carrier (27b) of the drive shaft (27) or of the pinion coupling part, respectively, can be inserted or with which it can engage.

3. The height-adjustable support (10) according to any one of the preceding claims, wherein the drive shaft (27) or the pinion coupling part, respectively, is provided with a bearing journal (27a) having at least a carrier (27b), preferably two carriers (27b), which preferably protrude radially.

4. The height-adjustable support (10) according to claim 3, wherein the carrier (27b) is designed to engage with the fast-gear gearwheel (32) after a displacement of the drive shaft (27) or of the pinion coupling part, respectively.

5. The height-adjustable support (10) according to claim 3 or 4, wherein the carrier (27b) has a width and an arrangement on the drive shaft (27) or on the pinion coupling part, respectively, such that at the same time a meshing with the fast-gear gearwheel (32) and the sleeve bearing (26) is made possible.

6. The height-adjustable support (10) according to any one of the preceding claims, wherein the drive shaft (27) is supported in a flange bearing (28), which heightwise is arranged below the driven shaft (12).

7. The height-adjustable support (10) according to any one of the preceding claims, wherein in the preferably retracted state of the support (10) the lower region of the fast-gear gearwheel (32) heightwise protrudes into the support inner tube (14).

8. The height-adjustable support (10) according to any one of the preceding claims, wherein the drive shaft (27) or the pinion coupling part, respectively, is arranged perpendicularly to the spindle.

9. The height-adjustable support (10) according to any one of the preceding claims, wherein the fast-gear gearwheel (32) is spaced within the shaft tube body (13) from the front wall of the latter.

10. The height-adjustable support (10) according to any one of the preceding claims, wherein the sleeve bearing (26) is supported in a bearing bore (19a) of the bearing block or load bearing base (19), respectively.

## Revendications

1. Support réglable en hauteur (10) pour semi-remorques ou similaires, comprenant
un corps à fût tubulaire (13) susceptible d'être fixé à un châssis de semi-remorque,
un tube intérieur de support (14) déplaçable agencé dans le corps à fût tubulaire (13), auquel est fixé un pied (15) au niveau de sa zone terminale inférieure, et qui est relié à un écrou (17) qui se trouve sur une broche (16), laquelle est susceptible d'être entraînée via un mécanisme qui comprend une zone à engrenages droits commutables (22, 23, 27c, 32) et un étage à engrenages coniques (20, 24),
dans lequel une zone de commutation du mécanisme comprend un pignon de fonctionnement en charge (27c) et un engrenage de fonctionnement rapide (32),
dans lesquels le pignon de fonctionnement en charge (27c) est agencé sur un arbre d'entraînement (27) ou sur une partie d'accouplement de pignon associée à celui-ci ou agencée sur celui-ci, qui est capable d'engrener avec un engrenage (22) de fonctionnement en charge,
dans lequel l'engrenage de fonctionnement rapide (32) est capable d'assurer l'entraînement d'un pignon de fonctionnement rapide (23),
dans lequel l'engrenage de fonctionnement rapide (32) est monté sur l'arbre d'entraînement (27) ou respectivement sur la partie d'accouplement de pignon, **caractérisé en ce que**
l'arbre d'entraînement (27) ou respectivement la partie d'accouplement de pignon est montée solidairement en rotation et axialement déplaçable dans un palier à douille (26), lequel est monté rotatif dans un bloc de montage ou un fond de support de charge (19) qui loge ou qui porte la broche (16).

2. Support réglable en hauteur (10) selon la revendication 1, dans lequel le palier à douille (26) comporte à l'intérieur au moins une rainure longitudinale (26a) dans laquelle peut être introduit un ergot d'entraînement (27b) de l'arbre d'entraînement (27) ou de la partie d'accouplement de pignon, ou dans laquelle l'ergot est capable de s'engager.

3. Support réglable en hauteur (10) selon l'une des revendications précédentes, dans lequel l'arbre d'entraînement (27) ou respectivement la partie d'accouplement de pignon comprend un tenon-palier (27a) avec au moins un ergot d'entraînement (27b) et de préférence deux ergots d'entraînement (27b) qui dépassent de préférence radialement.

4. Support réglable en hauteur (10) selon la revendication 3, dans lequel l'ergot d'entraînement (27b) est conçu, après une translation de l'arbre l'entraînement (27) ou de la partie d'accouplement de pignon, pour venir en engagement avec l'engrenage de fonctionnement rapide (32).

5. Support réglable en hauteur (10) selon la revendication 3 ou 4, dans lequel l'ergot d'entraînement (27b) présente une largeur et un agencement sur l'arbre d'entraînement (27) ou respectivement sur la partie d'accouplement de pignon de telle façon qu'un engagement avec l'engrenage de fonctionnement rapide (32) et avec le palier-douille (26) est simultanément rendu possible.

6. Support réglable en hauteur (10) selon l'une des revendications précédentes, dans lequel l'arbre d'entraînement (27) est monté dans un palier à bride (28), lequel est agencé en termes de hauteur au-dessous de l'arbre mené (12).

7. Support réglable en hauteur (10) selon l'une des revendications précédentes, dans lequel, de préférence dans la situation rétractée du support (10), la zone inférieure de l'engrenage de fonctionnement rapide (32) pénètre, en termes de hauteur, dans le tube intérieur de support (14).

8. Support réglable en hauteur (10) selon l'une des revendications précédentes, dans lequel l'arbre d'entraînement (27) ou respectivement la partie d'accouplement de pignon est agencé(e) perpendiculairement à la broche.

9. Support réglable en hauteur (10) selon l'une des revendications précédentes, dans lequel l'engrenage de fonctionnement rapide (32) est agencé à l'intérieur du corps à fût tubulaire (13) à distance de sa paroi antérieure.

10. Support réglable en hauteur (10) selon l'une des revendications précédentes,
dans lequel le palier-douille (26) est monté dans un perçage de palier (19a) du bloc-palier ou du fond de support de charge (19).
